# EUROPÄISCHE PATENTSCHRIFT

(11) **EP 1 970 226 B1**
(45) Veröffentlichungstag und Bekanntmachung des Hinweises auf die Patenterteilung: **09.03.2011**
(21) Anmeldenummer: 07024100.5
(22) Anmeldetag: 12.12.2007
(51) Int. Cl.: B60G 17/02, B60G 15/06, B60G 11/50, B60G 21/055

(54) **Radaufhängung für Kraftfahrzeuge**
Wheel suspension for motor vehicles
Suspension de roue pour véhicules automobiles

(30) Priorität: 14.03.2007 DE 102007012203
(43) Veröffentlichungstag der Anmeldung: 17.09.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 1 609 633
- EP-A- 1 681 181
- WO-A-2006/012858
- WO-A-2006/018050
- WO-A-2006/131343
- DE-A1-102005 001 739
- DE-B- 1 241 717
- DE-C1- 10 101 694
- FR-A- 2 696 223
- FR-A- 2 840 257
- JP-A- 60 094 810
- JP-A- 63 101 115
- JP-A- 2001 088 527

## Beschreibung

Die Erfindung betrifft eine Radaufhängung für Kraftfahrzeuge gemäß dem Oberbegriff des Patentanspruches 1.

Eine solche Radaufhängung zeigt beispielsweise der JP-A-63 101115, wonach das Kraftfahrzeug in zwei Niveaustellungen verstellbar ist. Dabei ist über einen Aktuator bzw. einen Hydraulikzylinder und ein Gestänge der dämpferseitige Federteller der Tragfeder des Federbeines relativ zum Aufbau verschiebbar. Die Federkraft der Tragfeder zuzüglich der dynamischen Radlastschwankungen belastet bei dieser Konstruktion ständig den Aktuator und dessen Gestänge und ist dementsprechend steif und verschleißfest auszuführen. Der Aktuator muss auf hohe Stellkräfte ausgelegt sein.

Demgegenüber ist aus der DE 10 2005 001 739 A1 eine Radaufhängung mit einem Federbein bekannt, das neben einer Tragfeder eine dazu in Reihe geschaltete Speicherfeder aufweist. Die Tragfeder ist an einem Federteller am Dämpferrohr des Stoßdämpfers des Federbein-Stoßdämpfers und an einem Verstellfederteller abgestützt, der mittels eines Aktuators relativ zum Dämpferrohr des Federbeins verschiebbar geführt ist. Die in Reihe zu der Tragfeder geschaltete Speicherfeder wirkt mit ihrer Federkraft der Tragfeder entgegen und ist einerseits am Kraftfahrzeugaufbau und andererseits an dem verschiebbar geführten Federteller der Tragfeder abgestützt.

Bei dieser Radaufhängung erfolgt die Verstellung des verschiebbaren Federtellers rotatorisch mittels eines Elektromotors in Verbindung mit einem Kugelgewindetrieb. Der rotatorische Antrieb ist dabei innerhalb des Federbeins integriert. Aufgrund des integrierten rotatorischen Antriebs ist der Platzbedarf des Federbeins im stark beengten Bauraum der Radaufhängung erhöht.

Aus der JP 60 094 810 A ist eine gattungsgemäße Radaufhängung mit einem Federbein bekannt, das aus einem Stoßdämpfer und einer Tragfeder gebildet ist. Die Tragfeder ist über einen Federteller am Aufbau des Kraftfahrzeuges und am Dämpferrohr des Stoßdämpfers abgestützt. Der Federteller ist relativ zum Aufbau verschiebbar geführt. Er kann mittels eines Einstellmechanismus relativ zum Dämpferrohr axial verschoben werden. Zudem weist das Federbein eine Speicherfeder mit einer der Tragfeder entgegengerichteten Federkraft auf, die sich einerseits am Aufbau des Kraftfahrzeugs und andererseits am verschiebbaren Federteller der Tragfeder abstützt. Der Einstellmechanismus ist radial außerhalb des Federbeins angeordnet. Aus der FR-A-2 696 223 ist eine weitere Radaufhängung für ein Kraftfahrzeug bekannt, bei der der dämpferseitige Federteller materialeinheitlich und einstückig an der Dämpferstelze angeformt ist. Aus der EP-A-1 681 181 ist ein Federträger mit einem höhenverstellbaren Federteller bekannt, der mit einem Aktuator in Verbindung ist, der als Stellglied einen Rotor in Verbindung mit einer Gewindespindel und einer Gewindemutter umfasst.

Die Aufgabe der Erfindung besteht darin, eine Radaufhängung bereitzustellen, dessen Federbein kompakt mit reduziertem Raumbedarf ausgeführt ist.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 ist der Aktuator außerhalb, insbesondere radial außerhalb des Federbeins angeordnet. Durch den extern angeordneten Aktuator entfällt der Antrieb innerhalb des Federbeins. Dadurch kann das Federbein einerseits kompakt angeordnet werden, während der Aktuator bauraumgünstig beabstandet vom Federbein etwa am Fahrzeugaufbau befestigt ist und über ein Gestänge auf den verschiebbar geführten Federteller einwirkt.

Dabei kann der Aktuator in einer linearen Hubbewegung ein Zug- und/oder Druckkraft auf den verschiebbaren Federteller aufbringen, so dass auf einen rotatorischen Antrieb verzichtet werden kann.

Bevorzugt kann der verschiebbar geführte Federteller radial außerhalb seiner Federauflage für die Tragfeder oder die Speicherfeder einen Anbindungspunkt für den Aktuator aufweisen. Dabei kann der Anbindungspunkt am verschiebbar geführten Federteller in Axialrichtung gegenüberliegend zur Federauflage für die Speicherfeder oder die Tragfeder angeordnet sein.

Erfindungsgemäß ist um den Stoßdämpfer als eine zweite Schraubendruckfeder eine Speicherfeder mit einer der Tragfeder entgegengerichteten Federkraft angeordnet. Die Speicherfeder stützt die sich einerseits am Aufbau des Kraftfahrzeuges und andererseits an dem verschiebbaren Federteller der Tragfeder ab. Die Speicherfeder ist somit in baulich günstiger Weise um den Stoßdämpfer herum zwischen den Aufbau und die Tragfeder geschaltet und wirkt quasi als innere Kraft, die der Federkraft der Tragfeder entgegenwirkt.

Bevorzugt entspricht die Federkraft der Speicherfeder etwa der erforderlichen Federkraft der Tragfeder bei leerem Kraftfahrzeug (z. B. in Konstruktionslage). Der verschiebbare Federteller ist dementsprechend bei dieser Belastung kraftfrei, d.h. die Tragfeder und die Speicherfeder sind im Gleichgewichtszustand. Über den Aktuator sind daraus resultierend nur Stellkräfte bei Niveauverstellungen der Karosserie des Kraftfahrzeuges und Kräfte aus Radlastschwankungen aufzunehmen. Der externe, nicht an das Federbein angebaute Aktuator kann beispielsweise ein Gleichteil für alle vier Einzel-Radaufhängungen des Kraftfahrzeuges sein.

In baulich vorteilhafter Weise der Erfindung können die Tragfeder und die Speicherfeder im wesentlichen übereinander angeordnet sein, wobei sich die Tragfeder am Dämpferrohr des Stoßdämpfers mittelbar oder unmittelbar und die Speicherfeder am Aufbau fest abstützt und der verschiebbare Federteller funktionell zwischen die beiden Federn geschaltet ist.

Des Weiteren kann eine der Federn im Durchmesser größer als die andere Feder ausgebildet sein, wobei die beiden Federn zumindest teilweise teleskopisch ineinander verschachtelt sind. Damit kann vermehrt baulichen Gegebenheiten der Radaufhängung entsprochen werden; z. B. kann die Baulänge der beiden Federn verkürzt und deren Bauraum in radialer Richtung an den erforderlichen Freiraum im Bewegungsbereich der Radaufhängungselemente angepasst werden.

Insbesondere kann dabei die obere Speicherfeder im Durchmesser größer als die darunter angeordnete Tragfeder ausgeführt sein.

Eine besonders robuste und fertigungstechnisch günstige Konstruktion des Federbeines wird erzielt, indem der verschiebbare Federteller auf einer um das Dämpferrohr und die Kolbenstange des Stoßdämpfers angeordneten Führungshülse geführt ist, welche Führungshülse an dem oberen, aufbauseitigen Federteller der Speicherfeder befestigt ist.

Zur Erzielung einer leichtgängigen und weitgehend verschleißfreien Führung kann der verschiebbare Federteller über ein Linear-Wälzlager auf der Führungshülse gelagert sein.

Zur gezielten Veränderung der Federrate der Tragfeder kann in an sich bekannter Weise innerhalb der Führungshülse eine am Federteller der Speicherfeder abgestützte, gummielastische Zusatzfeder angeordnet sein, die bei zunehmendem Einfedern der Radaufhängung an dem Dämpferrohr des Stoßdämpfers zur Anlage kommt und damit einem unzulässigem Durchfedern der Radaufhängung bei hoher Belastung des Kraftfahrzeuges entgegenwirkt.

Erfindungsgemäß ist der aufbaufeste Aktuator elektromechanisch mit einem Elektromotor und einem Getriebe ausgeführt, der über einen etwa horizontal verlaufenden Hebel und eine etwa achsparallel zum Stoßdämpfer ausgerichtete Koppel an dem verschiebbaren Federteller angelenkt ist. Dies ergibt eine baulich günstig an die Radaufhängung anbaubare und eine zuverlässige Krafteinleitung ermöglichende Konstruktion. Der Aktuator kann dabei zur Erzielung einer stabilen Befestigung an einem etwa in Höhe des Dämpferrohres des Stoßdämpfers verlaufenden Längsträger und/oder Querträger des Aufbaues des Kraftfahrzeuges befestigt sein.

Bevorzugt kann der dämpferseitige Federteller materialeinheitlich und einstückig an einer Dämpferstelze angeformt sein, die das Federbein mit einem Radaufhängungselement verbindet. Der dämpferseitige Federteller ist daher unmittelbar an der Dämpferstelze angeformt. Diese Maßnahme trägt vorteilhaft zu einer weiteren Verkürzung der Baulänge des Federbeines mit der Speicherfeder und der Tragfeder bei, wobei Befestigungsmittel für den dämpferseitigen Federteller entfallen können.

Im Gegensatz dazu ist im Stand der Technik der dämpferseitige Federteller - von der Dämpferstelze axial beabstandet - am Dämpferrohr vorgesehen. Der dämpferseitige Federteller ist dabei mit seiner Hutkrempe erst auf einer Axialhöhe des Dämpferrohrs angesetzt, bei der die Klemm-Lappen der herkömmlicherweise verwendeten Klemm-Klauen der Dämpferstelze nicht mehr stören, zwischen denen das Dämpferrohr geklemmt ist. Im Stand der Technik ist daher der Bauraum zwischen dem dämpferseitigen Federteller und der Dämpferstelze nicht nutzbar.

Schließlich kann in weiterer baulicher und montagetechnischer Vereinfachung das Dämpferrohr des Stoßdämpfers über eine koaxial zur Dämpfermittelachse ausgerichtete Gewindeverbindung in die Dämpferstelze eingeschraubt sein.

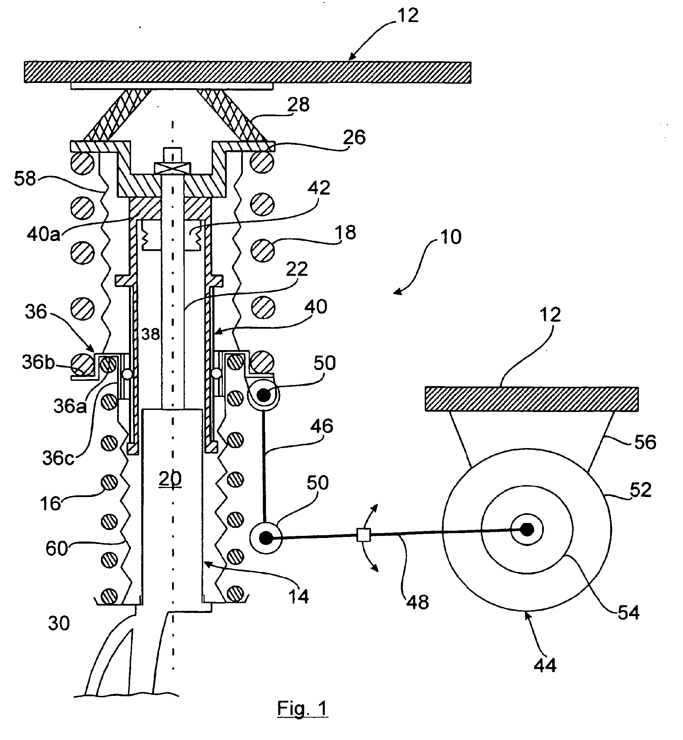

Ein Ausführungsbeispiel der Erfindung ist im Folgenden anhand der nur schematischen Zeichnung näher erläutert. Es zeigen:
- Fig.: 1 das Federbein einer Vorderachsen-Radaufhängung für Kraftfahrzeuge mit einer Speicherfeder, einer Tragfeder und einem auf einen verschieb- baren Federteller wirkenden, elektromechanischen Aktuator;
- **Fig.**: **2** die Dämpferstelze des Federbeines gemäß **Fig. 1** mit angeformten Fe- derteller und einer zentralen Gewindeverbindung mit dem Dämpferrohr des Stoßdämpfers; und
- **Fig.**: **3** grob schematisch einen Aktuator identischer Grundausführung für eine Hinterachsen-Radaufhängung.

In der **Fig. 1** der Zeichnung ist ein Federbein 10 einer nicht weiter dargestellten Radaufhängung für Kraftfahrzeuge dargestellt. Die Radaufhängung z. B. für ein Vorderrad eines Kraftfahrzeuges kann in einer dem Fachmann geläufigen Bauart ausgeführt sein, mit oberen und unteren Einzellenker, die mit dem Aufbau 12 (nur angedeutet) des Kraftfahrzeuges und einem Radträger gelenkig verbunden sind.

Zwischen dem Aufbau 12 des Kraftfahrzeuges und einem unteren Lenker der Radaufhängung (oder dem Radträger) ist das Federbein 10 eingeschaltet, das sich im wesentlichen aus einem Teleskop-Stoßdämpfer 14, einer Schraubendruckfeder als Tragfeder 16 und einer weiteren Schraubendruckfeder als Speicherfeder 18 zusammensetzt.

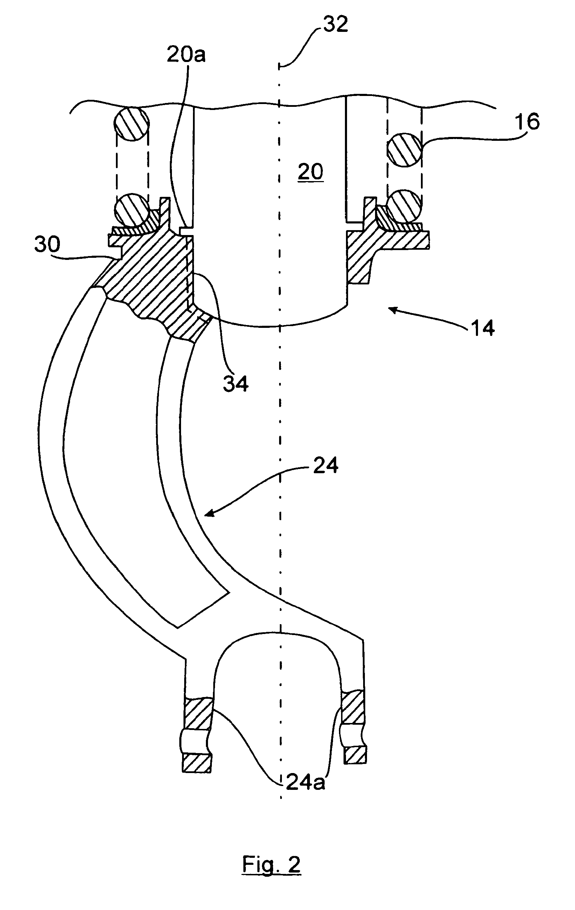

Der Stoßdämpfer 14 weist ein Dämpferrohr 20, eine dazu verschiebliche Kolbenstange 22 sowie eine nach unten abragende Dämpferstelze 24 (vgl. **Fig. 2**) auf. Die Dämpferstelze 24 ist über ein gabelförmiges Anschlussteil 24a mit einem nicht dargestellten Lenker der Radaufhängung des Kraftfahrzeuges gelenkig verbunden.

Die Kolbenstange 22 des Stoßdämpfers 14 ist über einen oberen Federteller 26 und ein Dämpferlager 28 am Aufbau 12 des Kraftfahrzeuges angelenkt. Am Federteller 26 ist ferner die oberhalb der Tragfeder 16 angeordnete Speicherfeder 18 aufbauseitig abgestützt.

Des weiteren ist die untere Tragfeder 16 über einen unteren Federteller 30 dämpferseitig abgestützt. Wie aus Fig. 2 ersichtlich ist, ist der Federteller 30 unmittelbar an die Dämpferstelze 24 angeformt. Zwischen dem Federteller 30 und dem gabelförmigen Anschlussteil 24a ist die Dämpferstelze 24 im Querschnitt H-profilförmig ausgebildet.

Ferner ist das Dämpferrohr 20 mittels einer koaxial zur Stoßdämpfer-Mittelachse 32 ausgerichteten Gewindeverbindung 34 fest in die Dämpferstelze 24 eingeschraubt. Dazu weist das Dämpferrohr 20 ein Außengewinde auf, das in ein korrespondierendes Innengewinde der Dämpferstelze 24 bis zu einem ringförmigen Anschlag 20a am Dämpferrohr 20 eingeschraubt ist.

Zwischen der Tragfeder 16 und der Speicherfeder 18 (vgl. Fig. 1) ist ein axial verschiebbarer Federteller 36 vorgesehen, der eine nach unten wirkende, ringförmige Auflagefläche 36a für die Tragfeder 16 und eine nach oben ausgerichtete, ringförmige Auflagefläche 36b für die Speicherfeder 18 aufweist. Die besagten Auflageflächen 36a, 36b sind an den größeren Durchmesser der Speicherfeder 18 bzw. an den kleineren Durchmesser der Tragfeder 16 angepasst und höhenmäßig derart zueinander versetzt, dass die jeweilige Endwicklung der Federn 16, 18 ineinander verschachtelt auf etwa gleicher Höhe liegen. Der Versatz könnte falls baulich erforderlich auch auf mehrere Federwindungen ausgedehnt sein.

Der Federteller 36 weist einen radial inneren Nabenabschnitt 36c auf, der über ein lineares Wälzlager 38 mit mehreren umfangsmäßig versetzten Kugelreihen auf einer Führungshülse 40 axial verschiebbar geführt ist. Die Kugeln sind in bei Linearlagern bekannter Weise in achsparallel in den Nabenabschnitt 36c und in die Führungshülse 40 eingeformten Kugelbahnen (ohne Bezugszeichen) in Umfangsrichtung formschlüssig geführt.

Die Führungshülse 40 ist mit einem Basisabschnitt 40a an dem Federteller 26 befestigt. An dem Basisabschnitt 40a ist zudem eine auf der Kolbenstange 22 angeordnete, gummielastische Zusatzfeder 42 abgestützt, die bei einem starken Durchfedern der Radaufhängung des Kraftfahrzeuges und ggf. bei hoher Beladung an der gegenüberliegenden Stirnseite des Dämpferrohres 20 zur Anlage kommt und somit als die Federrate der Tragfeder 16 erhöhende Zusatzfeder wirkt.

An dem entlang der Mittelachse 32 des Stoßdämpfers 14 verschiebbaren Federteller 36 ist ein nicht näher dargestellter elektromechanischer Aktuator 44 über eine etwa senkrecht verlaufende Koppel 46 und einem etwa horizontal verlaufenden Hebel 48 über entsprechende Gelenke 50 angelenkt.

Der Aktuator 44 setzt sich aus einem Hohlwellen-Elektromotor 52 und einem Getriebe 54 zusammen und ist an dem Aufbau 12 an einem etwa in Höhe des Dämpferrohres 20 des Stoßdämpfers 14 angeordneten Längsträger 56 (oder einem geeigneten Querträger) verwindungssteif befestigt. Das Getriebe 54 kann selbsthemmend ausgelegt sein und/oder es kann der Elektromotor 52 mit einer im nichtaktivierten Zustand wirksamen Bremse versehen sein. Ferner kann in an sich bekannter Weise eine Messeinrichtung für die momentane Niveaustellung des Kraftfahrzeuges vorgesehen sein.

Durch die externe Anordnung des Aktuators 44 mit dem Hebel 48 und der Koppel 46 außerhalb des Federbeines 10 und am Aufbau 12, 56 kann der Aktuator 44 als solches als Gleichteil sowohl bei Vorderachs-Radaufhängungen des Kraftfahrzeuges, wie sie in den **Fig. 1** **und** **2** gezeigt sind, als auch bei Hinterachs-Radaufhängungen verwendet werden, wie es grob schematisch in der **Fig. 3** gezeigt ist.

Die Auslegung der Speicherfeder 18 ist bevorzugt so, dass bei unbeladenem Kraftfahrzeug und in dessen Konstruktionslage die Federkräfte der Tragfeder 16 und der Speicherfeder 18 etwa im Gleichgewicht sind. Damit ist der verschiebbare Federteller 36 mit Bezug zum Aktuator 44 kraftfrei, d.h. dass keine Stützkräfte auf den Aktuator 44 wirken.

Durch Verschwenkung des Hebels 48 nach unten wird über die Koppel 46 der Federteller 36 ebenfalls nach unten verschoben und damit das Fahrzeugniveau angehoben (größere Bodenfreiheit) und bei umgekehrter Betätigung abgesenkt. Über den Aktuator 44 sind dabei nur die Differenzkräfte aus Tragfeder 16 und entgegenwirkender Speicherfeder 18 sowie Kräfte aus Radlaständerungen (Beladung, Federbewegungen aus Fahrbahnunebenheiten, etc) aufzubringen.

Wie auf der Zeichnung **Fig. 1** angedeutet, können zwischen dem Federteller 26 und dem verschiebbaren Federteller 36 sowie zwischen dem Nabenabschnitt 36c des Federtellers 36 und dem unteren, festen Federteller 30 gummielastische Schutzmanschetten 58, 60 vorgesehen sein, die einem Eindringen von Schmutz und Feuchtigkeit insbesondere in das Linear-Wälzlager 38 entgegenwirken.

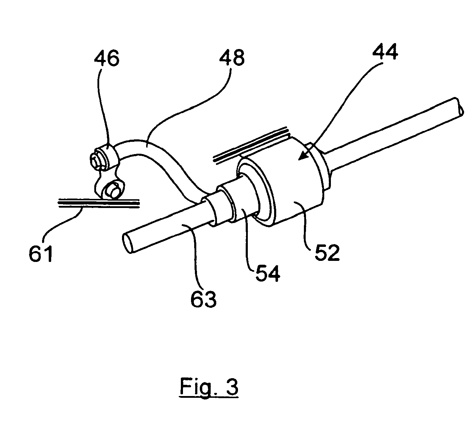

In der **Fig. 3** ist grob schematisch eine Hinterachse des Fahrzeugs angedeutet, deren dynamische Verstellung mittels eines Aktuators 44 erfolgt, der baugleich mit dem in der **Fig. 1** angedeuteten Aktuator 44 ist und an ein Hinterachsbauteil 61, etwa einen Trapezlenker, angreift. Der Aktuator 44 weist - wie bereits anhand der **Fig. 1** beschrieben - den Hohlwellen-Elektromotor 52 und das Getriebe 54 auf, das beispielsweise ein Planetengetriebe oder ein Harmonic-Drive-Getriebe ist.

Wie aus der **Fig. 3** hervorgeht, ist an dem Aktuator 44 ein Drehstab 63 angeflanscht, an dessen seitlichen Endbereich der Hebel 48 befestigt ist, der eine Schwenkbewegung an die Koppel 46 bzw. an den, an der Koppel 46 angelenkten Trapezlenker 61 überträgt. Erfindungsgemäß können daher sowohl für die Vorder- als auch Hinterachse jeweils in ihrer Grundausführung identische Aktuatoren 44 verwendet werden. Die sich dadurch ergebenden Synergieeffekte reduzieren den Kostenaufwand.

## Patentansprüche

1. Radaufhängung für Kraftfahrzeuge, mit einem Federbein (10), das aus einem Stoßdämpfer (14) und einer Tragfeder (16) gebildet ist, wobei die Tragfeder (16) über Federteller (26, 36) am Aufbau (12) des Kraftfahrzeuges und am Dämpferrohr (20) des Stoßdämpfers (14) abgestützt ist und ein Federteller (36) relativ zum Aufbau (12) verschiebbar geführt und mittels eines Aktuators (44) relativ zum Dämpferrohr (20) axial verschiebbar ist, und das Federbein (10) eine Speicherfeder (18) mit einer der Tragfeder (16) entgegengerichteten Federkraft aufweist, die sich einerseits am Aufbau (12) des Kraftfahrzeuges und andererseits an dem verschiebbaren Federteller (36) der Tragfeder (16) abstützt, wobei der Aktuator (44) außerhalb, insbesondere radial außerhalb des Federbeins (10) angeordnet ist, **dadurch gekennzeichnet, dass** der aufbaufeste Aktuator (44) elektromechanisch mit einem Elektromotor (52) und einem Getriebe (54) ausgeführt ist und über ein Gestänge (46, 48, 50) an dem verschiebbaren Federteller (36) angelenkt ist.

2. Radaufhängung nach Anspruch 1, **dadurch gekennzeichnet, dass** der Aktuator (44) in einer linearen Hubbewegung entlang der Federbein-Mittelachse den verschiebbaren Federteller (36) verstellt.

3. Radaufhängung nach Anspruch 1 oder 2, **dadurch gekennzeichnet, dass** der verschiebbare Federteller (36) außerhalb des Federbeins (10) mit einem Anbindungspunkt (50) für den Aktuator (44) vorgesehen ist.

4. Radaufhängung nach Anspruch 3, **dadurch gekennzeichnet, dass** der Anbindungspunkt (50) am verschiebbaren Federteller (36) in Axialrichtung gegenüberliegend zur Federauflage (36b) für die Speicherfeder (18) oder die Tragfeder (16) vorgesehen ist.

5. Radaufhängung nach einem der vorhergehenden Ansprüche, **dadurch gekennzeichnet, dass** der verschiebbare Federteller (36) auf einer um das Dämpferrohr (20) und die Kolbenstange (22) des Stoßdämpfers (14) angeordneten Führungshülse.(40) geführt ist, welche Führungshülse vorzugsweise an dem oberen, aufbauseitigen Federteller (26) der Speicherfeder (18) befestigt ist.

6. Radaufhängung nach Anspruch 5, **dadurch gekennzeichnet, dass** der verschiebbare Federteller (36) über ein Linear-Wälzlager (38) auf der Führungshülse (40) gelagert ist.

7. Radaufhängung nach einem der vorhergehenden Ansprüche, **dadurch gekennzeichnet, dass** die Tragfeder (16) und die Speicherfeder (18) im wesentlichen übereinander angeordnet sind, wobei sich die Tragfeder (16) am Dämpferrohr (20) des Stoßdämpfers (14) mittelbar oder unmittelbar und die Speicherfeder (18) am Aufbau (12) abstützt und der verschiebbare Federteller (36) funktionell zwischen die beiden Federn (16, 18) geschaltet ist.

8. Radaufhängung nach einem der vorhergehenden Ansprüche, **dadurch gekennzeichnet, dass** eine der Federn (18) im Durchmesser größer als die andere Feder (16) ausgebildet ist und dass die beiden Federn (16, 18) zumindest teilweise teleskopisch ineinander verschachtelt sind.

9. Radaufhängung nach einem der vorhergehenden Ansprüche, **dadurch gekennzeichnet, dass** die obere Speicherfeder (18) im Durchmesser größer als die darunter angeordnete Tragfeder (16) ausgeführt ist.

10. Radaufhängung nach einem der vorhergehenden Ansprüche, **dadurch gekennzeichnet, dass** der Aktuator (44) an einem etwa in Höhe des Dämpferrohres (20) des Stoßdämpfers (14) verlaufenden Längsträger (56) und/oder Querträger des Aufbaues (12) des Kraftfahrzeuges befestigt ist.

11. Radaufhängung nach einem der Ansprüche 5 bis 10, **dadurch gekennzeichnet, dass** innerhalb der Führungshülse (40) eine am festen Federteller (26) der Speicherfeder (18) abgestützte, gummielastische Zusatzfeder (42) angeordnet ist, die bei zunehmendem Einfedern der Radaufhängung an dem Dämpferrohr (20) des Stoßdämpfers (14) zur Anlage kommt.

12. Radaufhängung für Kraftfahrzeuge nach einem der vorhergehenden Ansprüche, mit einem Federbein (10), das über eine Dämpferstelze (24) mit einem Radaufhängungselement verbunden ist sowie einen Stoßdämpfer (14) und zumindest eine Tragfeder (16, 18) aufweist, die über einen dämpferseitigen Federteller (30) am Dämpferrohr (20) des Stoßdämpfers (14) abgestützt ist, **dadurch gekennzeichnet, dass** der dämpferseitige Federteller (30) materialeinheitlich und einstückig an der Dämpferstelze (24) angeformt ist.

13. Radaufhängung nach Anspruch 12, **dadurch gekennzeichnet, dass** das Dämpferrohr (20) des Stoßdämpfers (14) über eine koaxial zur Dämpfermittelachse (32) ausgerichtete Gewindeverbindung (34) in die Dämpferstelze (24) eingeschraubt ist.

14. Radaufhängung nach Anspruch 13, **dadurch gekennzeichnet, dass** der Federteller (30) der Dämpferstelze (24) ringförmig ausgebildet ist, an dessen Innenseite ein Innengewinde zur Verschraubung mit dem Stoßdämpfer (14) vorgesehen ist.

## Claims

1. Wheel suspension for motor vehicles, having a spring strut (10) which is formed from a shock-absorbing damper (14) and a load-bearing spring (16), wherein the load-bearing spring (16) is supported via spring plates (26, 36) on the body (12) of the motor vehicle and on the damper tube (20) of the shock-absorbing damper (14), wherein one spring plate (36) is guided so as to be movable relative to the body (12) and can be moved axially relative to the damper tube (20) by means of an actuator (44), and wherein the spring strut (10) has a store spring (18) with a spring force which acts counter to the load-bearing spring (16), said store spring (18) being supported at one side on the body (12) of the motor vehicle and at the other side on the movable spring plate (36) of the load-bearing spring (16), wherein the actuator (44) is arranged outside, in particular radially outside the spring strut (10), **characterized in that** the actuator (44), which is fixed with respect to the body, is of electromechanical design with an electric motor (52) and a gearing (54) and is articulatedly connected to the movable spring plate (36) via a linkage (46, 48, 50).

2. Wheel suspension according to Claim 1, **characterized in that** the actuator (44) adjusts the movable spring plate (36) in a linear stroke movement along the spring strut central axis.

3. Wheel suspension according to Claim 1 or 2, **characterized in that** the movable spring plate (36) has, outside the spring strut (10), a connecting point (50) for the actuator (44).

4. Wheel suspension according to Claim 3, **characterized in that** the connecting point (50) on the movable spring plate (36) is provided opposite the spring rest (36b) for the store spring (18) or the load-bearing spring (16) in the axial direction.

5. Wheel suspension according to one of the preceding claims, **characterized in that** the movable spring plate (36) is guided on a guide sleeve (40) arranged around the damper tube (20) and the piston rod (22) of the shock-absorbing damper (14), which guide sleeve is preferably fastened to the upper, body-side spring plate (26) of the store spring (18).

6. Wheel suspension according to Claim 5, **characterized in that** the movable spring plate (36) is mounted on the guide sleeve (40) by means of a linear rolling bearing (38).

7. Wheel suspension according to one of the preceding claims, **characterized in that** the load-bearing spring (16) and the store spring (18) are arranged substantially one above the other, wherein the load-bearing spring (16) is supported indirectly or directly on the damper tube (20) of the shock-absorbing damper (14) and the store spring (18) is supported on the body (12), and wherein the movable spring plate (36) is connected functionally between the two springs (16, 18).

8. Wheel suspension according to one of the preceding claims, **characterized in that** one of the springs (18) is of larger diameter than the other spring (16), and **in that** the two springs (16, 18) are at least partially nested telescopically one inside the other.

9. Wheel suspension according to one of the preceding claims, **characterized in that** the upper store spring (18) is of larger diameter than the load-bearing spring (16) situated therebelow.

10. Wheel suspension according to one of the preceding claims, **characterized in that** the actuator (44) is fastened to a longitudinal beam (56) and/or transverse beam, which runs approximately at the level of the damper tube (20) of the shock-absorbing damper (14), of the body (12) of the motor vehicle.

11. Wheel suspension according to one of Claims 5 to 10, **characterized in that** a resiliently elastic auxiliary spring (42) which is supported on the fixed spring plate (26) of the store spring (18) is provided within the guide sleeve (40), which auxiliary spring (42) comes into contact with the damper tube (20) of the shock-absorbing damper (14) with increasing compression of the wheel suspension.

12. Wheel suspension for motor vehicles according to one of the preceding claims, having a spring strut (10) which is connected via a damper stilt (24) to a wheel suspension element and which has a shock-absorbing damper (14) and at least one load-bearing spring (16, 18) which is supported via a damper-side spring plate (30) on the damper tube (20) of the shock-absorbing damper (14), **characterized in that** the damper-side spring plate (30) is formed in a materially integral and unipartite fashion on the damper stilt (24).

13. Wheel suspension according to Claim 12, **characterized in that** the damper tube (20) of the shock-absorbing damper (14) is screwed into the damper stilt (24) by means of a threaded connection (34) which is aligned coaxially with respect to the damper central axis (32).

14. Wheel suspension according to Claim 13, **characterized in that** the spring plate (30) of the damper stilt (24) is of annular design and has, on the inner side thereof, an internal thread for screwing to the shock-absorbing damper (14).

## Revendications

1. Suspension de roue pour véhicules automobiles, comprenant une jambe de force (10), qui est formée d'un amortisseur (14) et d'un ressort de support (16), le ressort de support (16) étant supporté par le biais de coupelles de ressort (26, 36) sur la carrosserie (12) du véhicule automobile et sur le tube d'amortissement (20) de l'amortisseur (14) et une coupelle de ressort (36) étant guidée de manière déplaçable par rapport à la carrosserie (12) et étant déplacée axialement au moyen d'un actionneur (44) par rapport au tube d'amortissement (20), et la jambe de force (10) présentant un ressort accumulateur (18) avec une force de ressort opposée au ressort de support (16), qui s'appuie d'une part sur la carrosserie (12) du véhicule automobile et d'autre part sur la coupelle de ressort déplaçable (36) du ressort de support (16), l'actionneur (44) étant disposé en dehors, notamment radialement en dehors de la jambe de force (10), **caractérisée en ce que** l'actionneur (44) fixé à la carrosserie est réalisé électromécaniquement avec un moteur électrique (52) et une transmission (54) et est articulé par le biais d'une tringlerie (46, 48, 50) à la coupelle de ressort déplaçable (36).

2. Suspension de roue selon la revendication 1, **caractérisée en ce que** l'actionneur (44) déplace, dans un mouvement de course linéaire le long de l'axe médian de la jambe de force, la coupelle de ressort déplaçable (36).

3. Suspension de roue selon la revendication 1 ou 2, **caractérisée en ce que** la coupelle de ressort déplaçable (36) est pourvue en dehors de la jambe de force (10) d'un point de liaison (50) pour l'actionneur (44).

4. Suspension de roue selon la revendication 3, **caractérisée en ce que** le point de liaison (50) sur la coupelle de ressort déplaçable (36) est prévu dans la direction axiale en face de l'appui de ressort (36b) pour le ressort accumulateur (18) ou le ressort de support (16).

5. Suspension de roue selon l'une quelconque des revendications précédentes, **caractérisée en ce que** la coupelle de ressort déplaçable (36) est guidée sur une douille de guidage (40) disposée autour du tube d'amortissement (20) et de la tige de piston (22) de l'amortisseur (14), laquelle douille de guidage étant fixée de préférence sur la coupelle de ressort supérieure (26) du côté de la carrosserie du ressort accumulateur (18).

6. Suspension de roue selon la revendication 5, **caractérisée en ce que** la coupelle de ressort déplaçable (36) est montée par le biais d'un palier à roulement linéaire (38) sur la douille de guidage (40).

7. Suspension de roue selon l'une quelconque des revendications précédentes, **caractérisée en ce que** le ressort de support (16) et le ressort accumulateur (18) sont disposés essentiellement l'un au-dessus de l'autre, le ressort de support (16) s'appuyant sur le tube d'amortissement (20) de l'amortisseur (14) de manière indirecte ou directe et le ressort accumulateur (18) s'appuyant sur la carrosserie (12) et la coupelle de ressort déplaçable (36) étant montée fonctionnellement entre les deux ressorts (16, 18).

8. Suspension de roue selon l'une quelconque des revendications précédentes, **caractérisée en ce que** l'un des ressorts (18) a un diamètre plus grand que celui de l'autre ressort (16) et **en ce que** les deux ressorts (16, 18) sont emboîtés au moins en partie de manière télescopique l'un dans l'autre.

9. Suspension de roue selon l'une quelconque des revendications précédentes, **caractérisée en ce que** le ressort accumulateur supérieur (18) est réalisé avec un diamètre plus grand que celui du ressort de support (16) disposé en dessous.

10. Suspension de roue selon l'une quelconque des revendications précédentes, **caractérisée en ce que** l'actionneur (44) est fixé à un support longitudinal (56) s'étendant approximativement à la hauteur du tube d'amortissement (20) de l'amortisseur (14) et/ou à un support transversal de la carrosserie (12) du véhicule automobile.

11. Suspension de roue selon l'une quelconque des revendications 5 à 10, **caractérisée en ce qu'**un ressort supplémentaire (42) en plastique élastomère, supporté sur la coupelle de ressort fixe (26) du ressort accumulateur (18) est disposé à l'intérieur de la douille de guidage (40), et vient en appui contre le tube d'amortissement (20) de l'amortisseur (14) lors de la course d'enfoncement croissante de la suspension de roue.

12. Suspension de roue pour véhicules automobiles selon l'une quelconque des revendications précédentes, comprenant une jambe de force (10), qui est connectée par le biais d'une flèche d'amortisseur (24) à un élément de suspension de roue, et présentant un amortisseur (14) et au moins un ressort de support (16, 18), qui est supporté par le biais d'une coupelle de ressort (30) du côté de l'amortisseur sur le tube d'amortissement (20) de l'amortisseur (14), **caractérisée en ce que** la coupelle de ressort (30) du côté de l'amortisseur est façonnée dans le même matériau et d'une seule pièce sur la flèche d'amortisseur (24).

13. Suspension de roue selon la revendication 12, **caractérisée en ce que** le tube d'amortissement (20) de l'amortisseur (14) est vissé par le biais d'une connexion filetée (34) orientée coaxialement par rapport à l'axe médian de l'amortisseur (32) dans la flèche d'amortisseur (24).

14. Suspension de roue selon la revendication 13, **caractérisée en ce que** la coupelle de ressort (30) de la flèche d'amortisseur (24) est réalisée sous forme annulaire, un filetage intérieur étant prévu sur son côté intérieur pour le vissage à l'amortisseur (14).
